Europäisches Patentamt

**European Patent Office**

**Office européen des brevets**

(11) Numéro de publication: **0 043 057**
**A1**

(12) **DEMANDE DE BREVET EUROPEEN**

(21) Numéro de dépôt: **81104753.9**

(22) Date de dépôt: **22.06.81**

(51) Int. Cl.³: **F 24 D 11/00**
**F 24 F 5/00, F 24 J 3/02**

(30) Priorité: **27.06.80 FR 8014403**

(43) Date de publication de la demande:
**06.01.82 Bulletin 82/1**

(84) Etats contractants désignés:
**AT BE CH DE FR GB IT LI LU NL SE**

(71) Demandeur: **NOVELERG Société Anonyme dite:**
**12, rue de la Baume**
**F-75008 Paris(FR)**

(71) Demandeur: **Kalisz, Jacques**
**122bis, rue de la Goutte d'Or**
**F-93300 Aubervilliers(FR)**

(72) Inventeur: **Kalisz, Jacques**
**188, avenue Jean Lolive**
**F-83500 Pantin(FR)**

(72) Inventeur: **Doucot, François**
**126, avenue Salvadore Alliende**
**F-92000 Nanterre(FR)**

(74) Mandataire: **Weinmiller, Jürgen et al,**
**Zeppelinstrasse 63**
**D-8000 München 80(DE)**

(54) **Maison climatisée.**

(57) Maison climatisée comportant une serre (1) et des capteurs solaires (4).

Elle est notamment caractérisée par le fait que la serre (1) est disposée à l'intérieur de la partie habitable de la maison.

FIG.2

EP 0 043 057 A1

0043057

- 1 -

## Maison climatisée

La présente invention a pour objet une maison climatisée au moins pour partie à l'aide de l'énergie solaire.

On connaît par le document FR-A 2 438 241 (demande de brevet français n° 78 28376 du 4 octobre 1978), une maison climatisée comprenant un capteur solaire pour le chauffage de la maison et comportant une serre disposée en façade sud, constituant une enceinte fermée, des moyens de circulation d'air étant prévus pour prélever l'air de cette serre et l'utiliser pour le chauffage de la partie habitable de la maison.

La disposition de la serre au sud peut, dans certaines configurations du terrain, compliquer la construction de la maison.

Un but de l'invention est de réaliser une maison climatisée pouvant être orientée dans les meilleures conditions d'utilisation solaire, quelles que soient les sujétions dues aux dispositions du terrain ou du plan d'urbanisme.

Un autre but de l'invention est de réaliser une maison climatisée dans laquelle la lumière du jour est bien distribuée dans la plupart des pièces, quelle que soit l'exposition de celles-ci.

La présente invention a pour objet une maison climatisée du type comprenant une serre constituant une enceinte fermée recevant l'énergie solaire et des moyens de circulation d'air pour prélever l'air de la serre et l'utiliser pour le chauffage de la partie habitable de la maison, caractérisée par le fait que la serre est disposée à l'intérieur de la partie habitable de la maison.

Avantageusement, la serre est disposée au centre géométrique de la maison. Selon un mode de réalisation, la serre présente quatre parois verticales surmontée d'une coiffe en forme de pyramide.

Préférentiellement, les faces de ladite pyramide sont dans le même plan que les faces du toit de la maison.

Dans un mode préféré de réalisation, le plancher de la serre sert de plafond au rez-de-chaussée de la maison.

Les auxiliaires de climatisation sont en parties disposés dans la serre.

Le stockage de chaleur est réalisé à l'extérieur de la maison, à l'intérieur d'un remblai s'appuyant à au moins l'un des murs de la maison.

L'invention va être précisée par la description d'un mode de réalisation préféré, en référence au dessin annexé dans lequel

- la figure 1 est une vue en élévation d'une maison selon l'invention,

- la figure 2 est une vue en élévation en coupe de la maison selon la figure 1,

- la figure 3 est une autre vue en coupe de la même maison,

- la figure 4 représente diverses orientations possibles de la maison.

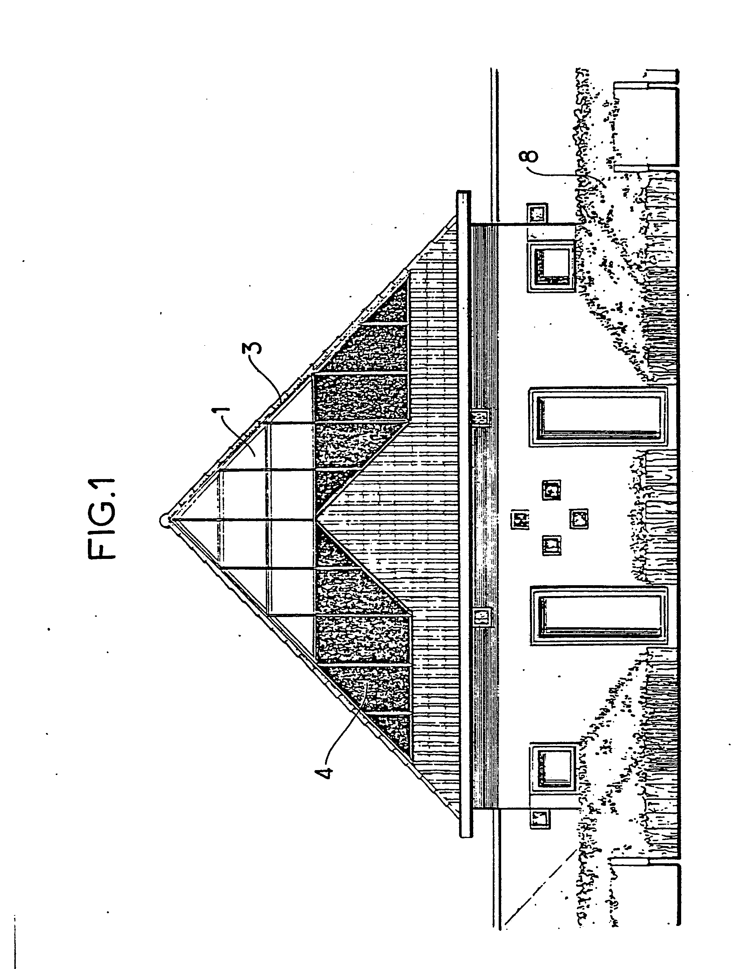

La figure 1 représente une maison selon l'invention ayant une façade du côté sud.

Une serre 1 se trouve au centre du bâtiment, elle n'est plus, comme dans l'art antérieur, excentrée par rapport au bâtiment.

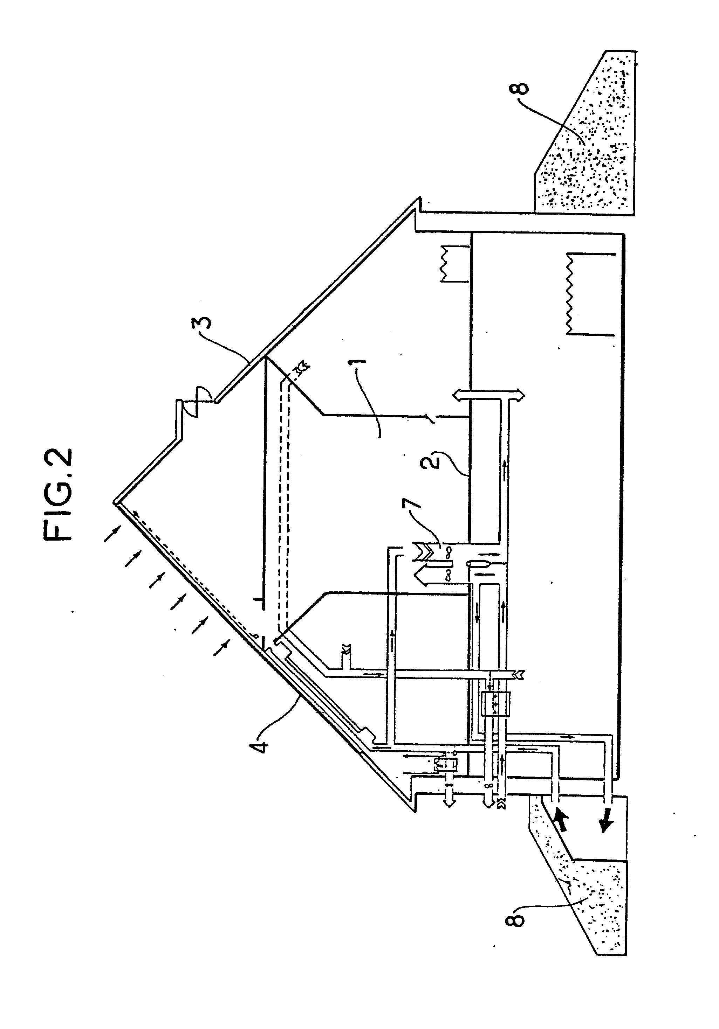

La figure 2 montre la serre 1 qui s'étend entre le plafond 2 du premier niveau et le sommet du toit 3.

Le toit de la serre coïncide avec les extrémités supérieures de la toiture.

Des capteurs solaires 4 sont disposés sur le toit, de préférence sur la face sud.

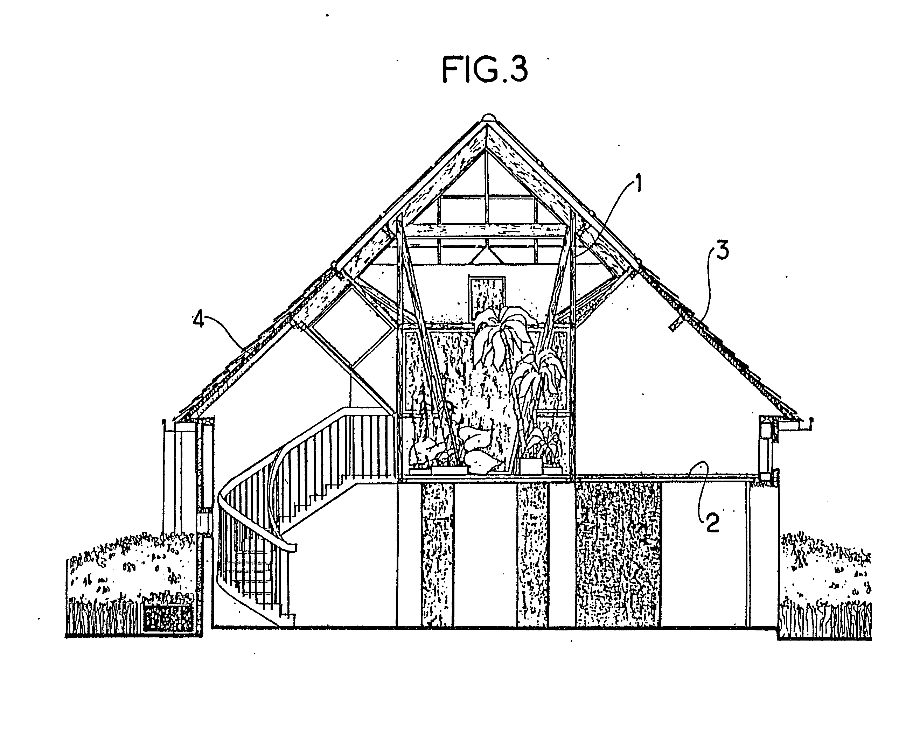

Comme le montre la figure 3, la serre par sa disposition permet une bonne répartition de l'éclairage dans les chambres du premier niveau.

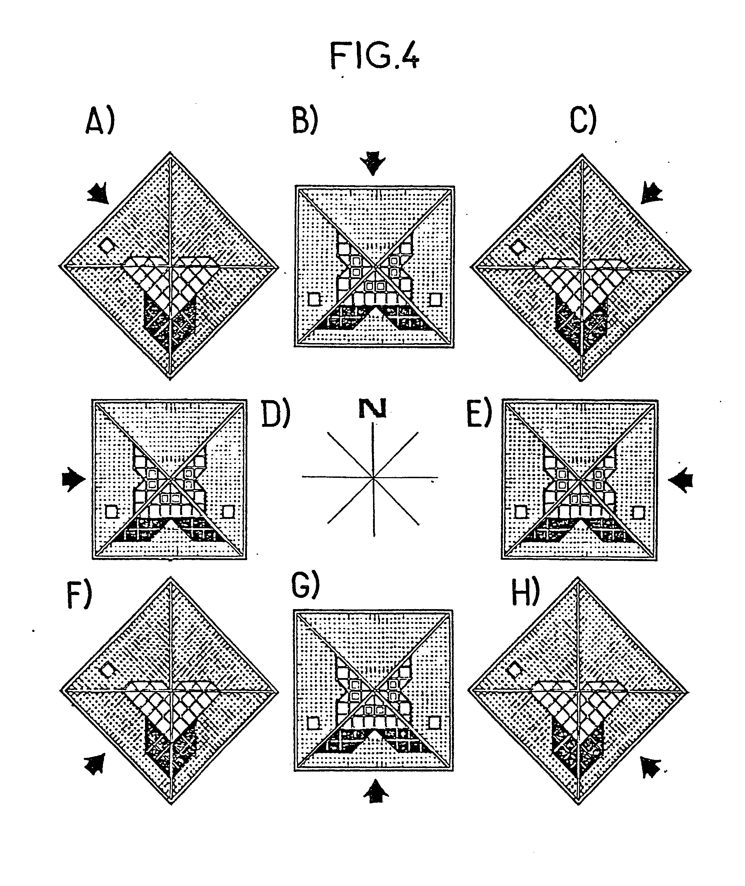

La figure 4 montre les diverses possibilités d'implantation de la maison. La serre peut déboucher sur quatre pans du toits comme dans les réalisations A, C, F et H ou sur trois seulement comme dans les réalisations B, D, E et G. De même (figures A, C, F et H) les capteurs solaires sont disposés sur deux pans du toit, ou sur un seul (figures B, D, E et G).

Les auxiliaires 7 du chauffage (pompes, ventilateurs) sont de préférence placés en partie dans la serre, ce qui permet un accès facile pour leur entretien.

Le stockage de la chaleur est avantageusement effectué dans un amas de cailloux enterré dans un remblai 8 (voir figure 1), qui s'appuie au moins partiellement contre les murs de la maison.

REVENDICATIONS

1/ Maison climatisée du type comprenant une serre constituant une enceinte fermée recevant l'énergie solaire et des moyens de circulation d'air pour prélever l'air de la serre et l'utiliser pour le chauffage de la partie habitable de la maison, caractérisée par le fait que la serre (1) est disposée à l'intérieur de la partie habitable de la maison.

2/ Maison climatisée selon la revendication 1, caractérisée par le fait que la serre (1) est disposée au centre géométrique de la maison.

3/ Maison climatisée selon l'une des revendications 1 et 2, caractérisée par le fait que la serre (1) présente quatre parois verticales surmontée d'une coiffe en forme de pyramide.

4/ Maison climatisée selon la revendication 3, caractérisée par le fait que les faces de ladite pyramide sont dans le même plan que les faces du toit (3) de la maison.

5/ Maison climatisée selon l'une des revendications 1 à 4, caractérisée par le fait que le plancher de la serre sert de plafond (2) au rez-de-chaussée de la maison.

6/ Maison climatisée selon l'une des revendications 1 à 5, caractérisée par le fait que les auxiliaires de climatisation (7) sont en parties disposés dans la serre (1).

7/ Maison climatisée selon l'une des revendications 1 à 6, caractérisée par le fait que le stockage de chaleur est réalisée à l'extérieur de la maison, à l'intérieur d'un remblai (8) s'appuyant à au moins l'un des murs de la maison.

FIG.1

FIG.2

# FIG.3

# FIG.4

A)

B)

C)

D)

N

E)

F)

G)

H)

**0043057**

Numéro de la demande

Office européen
des brevets

**RAPPORT DE RECHERCHE EUROPEENNE**

EP 81 10 4753

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendication concernée | |
| X | <u>US - A - 3 894 369</u> (SCHMITT)<br>* colonne 2, lignes 5-24; colonne 3, ligne 25 à colonne 5, ligne 13; figures 1 à 4 *<br><br>-- | 1,3,6 | F 24 D 11/00<br>F 24 F 5/00<br>F 24 J 3/02 |
| | <u>US - A - 4 103 825</u> (ZORNIG)<br>* colonne 2, ligne 13 à colonne 4, ligne 9; figures 1 à 6 *<br><br>-- | 1 | |
| | <u>US - A - 4 051 999</u> (GRANGER)<br>* colonne 2, ligne 27 à colonne 3, ligne 68; figures 1,2,3, 5 *<br><br>-- | 1,5 | **DOMAINES TECHNIQUES RECHERCHES (Int. Cl.³)**<br><br>A 01 G 9/24<br>F 24 D 11/00<br>11/02<br>F 24 F 5/00<br>F 24 J 3/02<br>E 04 H 1/02 |
| P | <u>US - A - 4 231 351</u> (PHEILS)<br>* colonne 2, ligne 18 à colonne 3, ligne 50; figures 1,2 *<br><br>------ | 1,2,3, 6 | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 01.10.1981 | HERYGERS |

OEB Form 1503.1 06.78